# NOUVEAU FASCICULE DE BREVET EUROPEEN

(11) **EP 2 984 229 B2**
(45) Date de publication et mention de la décision concernant l'opposition: **26.10.2022**
(45) Mention de la délivrance du brevet: 31.05.2017
(21) Numéro de dépôt: 14721528.9
(22) Date de dépôt: 09.04.2014
(51) Int. Cl.: D21H 21/44, D21H 21/48, B42D 15/00, D21H 17/67, D21H 17/69, D21H 21/52

(54) **ELEMENT DE SECURITE COMPORTANT UN PIGMENT INTERFERENTIEL ET UNE CHARGE NANOMETRIQUE**
SICHERHEITSELEMENT MIT EINEM INTERFERENZPIGMENT UND EINEM NANOMETRISCHEN FÜLLSTOFF
SECURITY ELEMENT COMPRISING AN INTERFERENCE PIGMENT AND A NANOMETRIC FILLER

(30) Priorité: 11.04.2013 FR 1353251
(43) Date de publication de la demande: 17.02.2016
(73) Titulaire: Oberthur Fiduciaire SAS, 75008 Paris (FR)
(72) Inventeur: MACHIZAUD, Jacques, F-38500 Voiron (FR); MAMAN, Aurélie, F-38470 Chasselay (FR); CAMUS, Michel, F-38140 Rives (FR)
(74) Mandataire: Nony
(86) Numéro de dépôt international: PCT/IB2014/060560
(87) Numéro de publication internationale: WO 2014/167512

(56) Documents cités:
- EP-A2- 1 609 619
- US-A1- 2005 151 368
- US-A1- 2008 030 020
- US-A1- 2010 213 698
- US-B1- 6 491 324

## Description

La présente invention concerne les éléments de sécurité, notamment ceux destinés aux documents sécurisés.

Par « document sécurisé », on désigne un moyen de paiement, tel qu'un billet de banque, un chèque ou un ticket restaurant, un document d'identité, tel qu'une carte d'identité, un visa, un passeport ou un permis de conduire, un ticket de loterie, un titre de transport, une vignette ou un timbre fiscal, ou encore un ticket d'entrée à des manifestations culturelles ou sportives.

Il est connu d'intégrer à un substrat papetier un fil de sécurité. Ce fil est introduit totalement en masse dans le papier ou en variante au moins en partie en surface du papier, notamment en fenêtre. Ce fil comporte généralement un texte qui apparaît en lumière transmise, parfois encore appelé CLEARTEXT^{®}. Hors des éventuelles fenêtres, il est préférable que le fil ne soit pas visible en réflexion, pour ne pas nuire à l'esthétique du document et ne pas gêner la visibilité des impressions portées par le substrat. Ceci apporte de plus une sécurisation supplémentaire, le fil et son texte étant peu ou pas visibles en lumière réfléchie et visibles en lumière transmise.

Pour réduire la visibilité du fil, plusieurs solutions existent.

Une première solution consiste à utiliser un fil très réfléchissant, en déposant une épaisseur de métal relativement importante, permettant d'obtenir une densité optique élevée. Cependant, pour obtenir des effets optiques particuliers, notamment basés sur la semi-transparence de la couche métallique, certains éléments de sécurité nécessitent des couches métalliques, par exemple d'aluminium, de faible densité optique.

Une deuxième solution consiste à appliquer une couche de masquage sur le fil. L'utilisation d'une couche masquante constituée de dioxyde de titane, d'oxyde de zinc ou d'autres particules permet de rendre le verso du fil blanc mat, diminuant l'aspect métallique du fil. Ces couches sont en général de faible épaisseur et ne permettent pas de masquer de façon optimale un fil de sécurité. De plus, l'augmentation de l'épaisseur de telles couches affecte la visibilité des CLEARTEXT^{®} en lumière transmise.

US 2010/0213698 A1 divulgue une solution de ce type. La couche de masquage présente des propriétés de diffusion de la lumière similaires à celles du papier.

Si la couche de masquage recouvre uniformément une face du fil, son opacité réduit la visibilité du texte en lumière transmise. Il est possible de ne déposer la couche de masquage que sur le métal, mais cela complique le procédé de fabrication. De plus, la couche de masquage peut faire écran aux UV et s'opposer ainsi à l'utilisation de couches luminescentes au sein du fil.

Une troisième solution pour diminuer la visibilité du fil consiste à réaliser une couche de masquage sous la forme d'une couche métallique semi-réfléchissante, continue ou tramée. L'inconvénient de cette solution est de diminuer la visibilité du texte.

FR 2 871 174 divulgue un document comportant un vecteur d'information et un élément de masquage en bande.

US 2002/0056758 divulgue une couche de protection opaque apposée sur les deux faces d'une couche magnétique. Cette couche opaque peut contenir des pigments iridescents. Une variante consiste à imprimer le fil avec une encre opaque, contenant par exemple du dioxyde de titane, qui ne laisse pas passer le rayonnement UV, ou des pigments optiquement variables.

US 5 876 068 décrit une couche métallique réfléchissante appliquée sur toute la surface du fil.

Par ailleurs il est également connu d'appliquer sur des fils de sécurité une couche métallique recouverte d'une fine couche de masquage blanche ou comprenant un agent matifiant. Une telle couche permet le fonctionnement de certains détecteurs sur machine à papier, notamment des détecteurs de retournement des fils de sécurité. Cependant en diminuant la réflexion de la couche métallique, la fine couche de masquage rend le fil plus visible en réflexion. De plus, l'augmentation de l'épaisseur de la couche de masquage réduit la visibilité des CLEARTEXT^{®} en lumière transmise.

Il existe un besoin pour bénéficier d'un élément de sécurité dont la visibilité en lumière réfléchie soit diminuée, sans pour autant que la lecture des informations de l'élément de sécurité en lumière transmise soit dégradée outre mesure.

L'invention atteint ce but grâce à un élément de sécurité selon la revendication 1.

La charge et le pigment reçoivent la lumière incidente et peuvent ajouter leurs effets optiques pour réduire la visibilité de l'élément de sécurité.

La structure de masquage se présente de préférence sous forme d'une couche de masquage unique, comportant le mélange du pigment et de la charge, ou selon une variante sous la forme de deux couches superposées contenant respectivement la charge et le pigment. Ces deux couches peuvent être contigües et superposées.

Grâce à l'invention, l'élément de sécurité peut être moins visible dans la ou les zones où sa visibilité nuirait à l'aspect du document, en raison de la présence de la structure de masquage, qui s'étend par exemple sur au moins toute une face de l'élément.

La taille des nanoparticules de la charge induit une diffusion de la lumière dépendant de la longueur d'onde incidente. Ainsi les longueurs d'onde courtes (bleu), moyennes (vert) et longues (rouge) ne sont pas diffusées avec la même intensité. Le bleu est davantage diffusé pour des particules de petite taille, notamment dont D50 est entre 150 et 250 nm, et l'on obtient donc une couleur à dominante rouge-orangée en transmission (donc en réflexion spéculaire si les particules sont placées sur une couche au moins partiellement réfléchissante) et une couleur à dominante bleutée en réflexion diffuse.

Le pigment interférentiel multicouche présente la particularité de sélectionner préférentiellement certaines longueurs d'onde en réflexion et en transmission. Par exemple, un pigment iridescent bleu réfléchit dans la direction spéculaire (angle de réflexion égal à l'angle d'incidence) davantage les longueurs d'onde bleues que les autres. En transmission, la couleur obtenue est alors complémentaire de la couleur en réflexion, c'est-à-dire rouge-orangé. Les pigments interférentiels multicouches peuvent être relativement transparents, car peu absorbants, et par conséquent une couche de pigment interférentiel multicouche aura, en réflexion diffuse (dans toutes les autres directions autres que la direction spéculaire) la même couleur qu'en transmission (complémentaire à la couleur en réflexion spéculaire). En reprenant l'exemple ci-dessus, la couche de pigment iridescent bleu étalée sur un papier blanc donnera une couleur rouge-orangée.

Par combinaison de la couleur liée à la diffusion de la lumière par la charge nanométrique et de celle liée à la réflexion diffuse par le pigment interférentiel multicouche, on peut obtenir par synthèse additive des couleurs, une couleur sensiblement proche de celle du substrat, par exemple blanche, en choisissant de manière adéquate la couleur du pigment et celle de la charge ; de préférence, on combine à la charge nanométrique un pigment interférentiel multicouche bleu, vert ou bleu-vert, voire un mélange de pigments verts et bleus.

La combinaison du pigment et de la charge renforce la diffusion de la lumière incidente au sein de la structure de masquage, et diminue la visibilité en réflexion de l'élément de sécurité.

Bien que l'élément de sécurité soit de préférence un fil de sécurité, l'invention conserve un intérêt lorsque l'élément de sécurité est un foil ou une planchette ou un élément de sécurité autre.

Par « charge nanométrique », il faut comprendre une charge d'un ou plusieurs composés pulvérulents dont la taille moyenne D50 est comprise entre 1 nm et 1000 nm. La charge peut être constituée d'un seul matériau particulaire, de préférence transparent au rayonnement UV.

En particulier, l'élément de sécurité peut comporter au moins un agent luminescent et la charge nanométrique est au moins partiellement, de préférence totalement, transparente au rayonnement UV, notamment au rayonnement UV utile à la luminescence. Dans ce cas, la charge nanométrique au moins partiellement transparente aux UV est présente en une quantité massique comprise entre 20 et 80 %, mieux comprise entre 30 et 70 % et encore mieux entre 40 et 60%, par rapport à la masse de la structure de masquage. Toutes les masses et poids sont exprimés en sec, sauf mention contraire.

Des charges nanométriques telles que de la silice, du dioxyde de titane, du carbonate de calcium, du sulfate de baryum et de l'oxyde de zinc peuvent être utilisées.

La taille nanométrique de ladite charge permet d'augmenter la diffusion de la lumière au sein de la structure de masquage. Une telle charge diffuse des longueurs d'ondes correspondant à la lumière visible ce qui permet d'obtenir un effet de masquage de l'élément de sécurité situé sous la structure de masquage.

De préférence ladite charge nanométrique présente une dimension D50 comprise entre 30 et 1000 nm, mieux entre 30 et 500 nm, encore mieux entre 50 et 300 nm.

Par « pigment interférentiel multicouche » il faut comprendre un pigment produisant une couleur par un phénomène d'interférences grâce à une succession sur le trajet de la lumière d'au moins deux matériaux d'indices de réfraction différents. Un pigment interférentiel multicouche est encore parfois qualifié de « nacre » dans le cas de couches déposées sur une base de forme plaquettaire. Un pigment interférentiel multicouche est différent d'un cristal liquide, qui peut générer également une couleur par un phénomène d'interférences en raison de sa structure intrinsèque.

De préférence, le pigment interférentiel multicouche selon l'invention comporte une base transparente, de préférence minérale, revêtue d'au moins une couche d'un matériau d'indice de réfraction différent de celui de la base. Le pigment peut comporter une base plaquettaire, de préférence en mica ou en verre. Par exemple, le pigment comporte du mica ou de la silice (dioxyde de silicium) enrobé de dioxyde de titane.

De préférence, comme expliqué ci-dessus, le pigment interférentiel présente une couleur bleue, verte ou bleu-vert.

La taille moyenne D50 du pigment est de préférence comprise entre 2 et 150 microns, mieux entre 5 et 40 microns, encore mieux entre 5 et 25 microns.

Le pigment interférentiel multicouche peut être non goniochromatique, et ne comporter par exemple qu'une seule couche enrobant une base.

L'élément de sécurité peut présenter deux faces principales opposées et la structure de masquage être disposée de façon à diminuer la visibilité d'au moins l'une desdites faces. Par exemple, la structure de masquage recouvre un support de l'élément de sécurité sur l'un de ses côtés. La structure de masquage peut s'étendre sous la forme d'un revêtement continu sans ajours, grâce à la faible opacité de la charge et du pigment. Ainsi, la fabrication de l'élément de sécurité est facilitée. La structure de masquage peut recouvrir des zones transparentes ou translucides d'une structure de sécurité portée par l'élément de sécurité, ainsi que des zones opaques de la structure de sécurité.

De préférence encore, la charge nanométrique comporte de la silice colloïdale, notamment pyrogénée, mieux est constituée de silice colloïdale pyrogénée. Une charge nanométrique comportant de la silice (dioxyde de silicium) est avantageuse car elle présente l'avantage de ne pas absorber le rayonnement UV utile à la luminescence, ce qui permet de réaliser l'élément de sécurité avec une ou plusieurs couches luminescentes, notamment fluorescentes sous UV.

La silice colloïdale peut être présente en une quantité massique comprise entre 20 et 80 %, mieux comprise entre 30 et 70 % et encore mieux entre 40 et 60%, par rapport à la masse de la structure de masquage.

La silice colloïdale a de préférence une dimension D50 comprise entre 30 et 1000 nm, mieux entre 30 et 500 nm, encore mieux entre 50 et 300 nm.

La quantité massique de pigment interférentiel multicouche par rapport à la masse de la structure de masquage est comprise entre 1 et 40 %, mieux entre 2 et 30 %, encore mieux entre 5 et 15 %. Toutes les masses et poids sont exprimés en sec, sauf mention contraire.

L'épaisseur de la structure de masquage, notamment lorsque celle-ci se présente sous forme de couche unique, peut être comprise entre 2 et 30 microns, mieux entre 5 et 20 microns, encore mieux entre 8 et 13 microns.

Le pigment et la charge (ou les charges) peuvent être dispersés dans un liant, qui peut être de tout type, et notamment être appliqué à l'état fluide sur l'élément lors de sa fabrication. Ce liant peut réticuler au séchage ou sous irradiation UV.

L'élément de sécurité comporte une structure de sécurité qui peut être réalisée de diverses façons. La structure de sécurité comporte une couche opaque, notamment imprimée ou déposée par un procédé de dépôt sous vide, et au moins un ajour dans cette couche opaque. De façon particulièrement avantageuse, la structure de sécurité est réfléchissante et comporte notamment une métallisation / démétallisation. Il s'agit de préférence d'une structure de sécurité réfléchissante de faible densité optique, notamment associée à des couches opaques sous-jacentes. Le métal est par exemple de l'aluminium, de l'or, du cuivre, du fer, de l'argent, du chrome, du nickel, du zinc, du cadmium, du bismuth, et leurs alliages et oxydes. Des ajours sous forme de texte, par exemple en écriture négative, sont formés de façon conventionnelle dans le métal par démétallisation.

L'élément de sécurité peut comporter une charge nanométrique supplémentaire, au sein de la structure de masquage. Dans ce cas, les deux charges nanométriques diffèrent de préférence au moins par leur indice de réfraction, notamment d'au moins 0,5 et de préférence d'au moins 0,8.

De préférence, ladite charge nanométrique supplémentaire présente une dimension D50 comprise entre 30 et 1000 nm, mieux entre 30 et 500 nm, encore mieux entre 50 et 300 nm.

Ainsi, l'ajout d'une charge nanométrique supplémentaire conduit à une amplification du phénomène de diffusion de la lumière et permet d'obtenir un masquage optimal, notamment pour une épaisseur donnée de la structure de masquage.

Sans être liée par une théorie, la Demanderesse estime que le mélange d'au moins deux charges nanométriques d'indices de réfraction différents permet d'amplifier le phénomène de diffusion car la charge nanométrique d'indice de réfraction moindre réfracte peu la lumière incidente qui parcourt alors un chemin optique plus grand et pénètre davantage au sein de la structure de masquage, tandis que la charge nanométrique d'indice de réfraction plus élevé augmente le nombre de diffusions au sein de la structure de masquage. On obtient ainsi une pénétration importante et une diffusion importante de la lumière au sein de la structure de masquage, permettant ainsi de masquer ledit élément de sécurité en réflexion sans que la structure de masquage ne soit opaque, ce qui nuirait à la visibilité de l'élément de sécurité en lumière transmise.

La charge nanométrique supplémentaire est de préférence incorporée dans une structure de masquage se présentant sous forme d'une couche de masquage unique, comportant le mélange des charges nanométriques et d'un pigment interférentiel multicouche.

La quantité massique en charge nanométrique supplémentaire par rapport à la masse de la structure de masquage est de préférence comprise entre 1 et 40 %, mieux entre 2 et 30 %, encore mieux entre 3 et 15 %.

L'élément de sécurité peut comporter comme charge nanométrique supplémentaire du dioxyde de titane dans la structure de masquage. De préférence, la quantité de dioxyde de titane est suffisamment faible pour ne pas absorber outre mesure le rayonnement UV et permettre l'utilisation au sein de l'élément de sécurité d'au moins un composé luminescent, notamment fluorescent sous UV (365 nm), par exemple appliqué par impression ou mélangé à la couche de masquage ou à un vernis ou à un adhésif de l'élément de sécurité.

Selon cette combinaison, on veillera à limiter la proportion de la charge nanométrique ayant l'indice de réfraction le plus élevé, par exemple le dioxyde de titane, afin de limiter l'opacification en lumière transmise et le cas échéant l'absorption des UV.

Le dioxyde de titane est de préférence de nature anatase car il a l'avantage de présenter une plus faible absorption des UV par rapport au dioxyde de titane de nature rutile. Le dioxyde de titane anatase est notamment au moins partiellement transparent aux UV, et en particulier transparent sur au moins une plage de longueurs d'onde du domaine des UV.

Le dioxyde de titane peut être présent en une quantité massique comprise entre 1 et 40 %, mieux entre 2 et 30 %, encore mieux entre 3 et 15 % par rapport à la masse de la structure de masquage.

Le dioxyde de titane a de préférence une dimension D50 comprise entre 30 et 1000 nm, mieux entre 30 et 500 nm, encore mieux entre 50 et 300 nm.

Selon une variante préférée, ladite structure de masquage se présente sous forme d'une couche de masquage unique, comportant le mélange de silice colloïdale, notamment pyrogénée, de dioxyde de titane, notamment anatase, et d'un pigment interférentiel multicouche.

Selon cette variante, la silice colloïdale induit une diffusion de la lumière plus importante dans les longueurs d'onde courtes (bleu) et l'on obtient donc une couleur à dominante rouge-orangée en transmission (donc en réflexion spéculaire si les particules sont placées sur une couche au moins partiellement réfléchissante). Le dioxyde de titane permet de modifier le trajet de la lumière en augmentant la diffusion au sein de la structure de masquage ce qui apporte une plus grande opacité et réduit ainsi l'aspect réfléchissant rouge-orangé produit par la silice colloïdale.

De préférence, l'élément de sécurité selon l'invention comporte un support, notamment en un matériau thermoplastique, de préférence du PET ou du polyester. Ce support est de préférence entièrement transparent.

La structure de sécurité peut être située d'un côté du support et la structure de masquage de l'autre côté. La structure de sécurité et la structure de masquage peuvent aussi être situées d'un même côté du support. La structure de masquage peut encore être présente en double sur l'élément de sécurité, de chaque côté du support, ce qui peut être souhaitable pour masquer un fil magnétique par exemple.

L'élément de sécurité peut comporter un agent luminescent, notamment fluorescent, par exemple appliqué par impression, mélangé à un vernis ou à un adhésif de l'élément de sécurité ou de préférence incorporé à la structure de masquage, plus préférentiellement mélangé à une couche de masquage comprenant le pigment interférentiel multicouche et la charge nanométrique.

L'élément de sécurité peut comporter un adhésif thermoscellable, notamment au contact de la structure de masquage. L'adhésif peut comporter un agent luminescent, notamment fluorescent sous UV

Il est avantageux que l'élément de sécurité comporte un agent luminescent, de préférence fluorescent sous UV, notamment au sein d'une couche distincte de la structure de masquage, de préférence au sein d'une couche située à l'opposé de la structure de sécurité relativement au support, lorsque celui-ci existe.

L'invention a encore pour objet, selon un autre de ses aspects, un document sécurisé incorporant un élément de sécurité selon l'invention. L'élément de sécurité est par exemple incorporé en masse, en fenêtre ou à la surface du substrat du document. La structure de masquage peut être présente au verso de l'élément de sécurité, lorsque la fenêtre est située du côté du recto.

L'élément de sécurité peut ou non s'étendre d'un bord à l'autre du document.

Le document peut comporter un ou plusieurs éléments de sécurité supplémentaires tels que définis ci-après.

Parmi les éléments de sécurité supplémentaires, certains sont détectables à l'oeil, en lumière du jour ou en lumière artificielle, sans utilisation d'un appareil particulier. Ces éléments de sécurité supplémentaires comportent par exemple des fibres ou planchettes colorées, des fils imprimés ou métallisés totalement ou partiellement. Ces éléments de sécurité supplémentaires sont dits de premier niveau.

D'autres types d'éléments de sécurité supplémentaires sont détectables seulement à l'aide d'un appareil relativement simple, tel qu'une lampe émettant dans l'ultraviolet (UV) ou l'infrarouge (IR). Ces éléments de sécurité supplémentaires comportent par exemple des fibres, des planchettes, des bandes, des fils ou des particules. Ces éléments de sécurité peuvent être visibles à l'oeil nu ou non, étant par exemple luminescents sous l'éclairage d'une lampe de Wood émettant à une longueur d'onde de 365 nm. Ces éléments de sécurité sont dits de deuxième niveau.

D'autres types d'éléments de sécurité supplémentaires nécessitent pour leur détection un appareil plus sophistiqué. Ces éléments de sécurité sont par exemple capables de générer un signal spécifique lorsqu'ils sont soumis, de manière simultanée ou non, à une ou plusieurs sources d'excitation extérieure. La détection automatique du signal permet d'authentifier, le cas échéant, le document. Ces éléments de sécurité supplémentaires comportent par exemple des traceurs se présentant sous la forme de matières actives, de particules ou de fibres, capables de générer un signal spécifique lorsque ces traceurs sont soumis à une excitation optronique, électrique, magnétique ou électromagnétique. Ces éléments de sécurité supplémentaires sont dits de troisième niveau.

Le ou les éléments de sécurité supplémentaires présents au sein du document peuvent présenter des caractéristiques de sécurité de premier, de deuxième ou de troisième niveau.

L'invention a encore pour objet, selon un autre de ses aspects, un procédé d'authentification d'un document tel que défini ci-dessus, dans lequel on observe en lumière transmise l'élément de sécurité. L'observation peut s'effectuer au travers d'une fenêtre du document.

L'invention a encore pour objet, selon un autre de ses aspects, un procédé de fabrication d'un document tel que défini ci-dessus, dans lequel on incorpore en fenêtre ou en surface l'élément de sécurité.

L'invention pourra être mieux comprise à la lecture de la description détaillée qui va suivre, d'exemples de mise en oeuvre non limitatifs de celle-ci, ainsi qu'à l'examen du dessin annexé, sur lequel :
- la figure 1 représente de façon schématique un exemple de document sécurisé selon l'invention,
- la figure 2 représente en coupe transversale selon II-II le document sécurisé et l'élément de sécurité,
- les figures 3 et 4 représentent en coupe transversale selon II-II des variantes de l'élément de sécurité,
- la figure 5 représente en section une variante de document sécurisé selon l'invention,
- la figure 6 représente isolément une variante d'élément de sécurité, et
- la figure 7 représente isolément, en vue de dessus, l'élément de sécurité de la figure 2.

Sur les figures, les proportions réelles respectives des différents éléments constitutifs n'ont pas toujours été respectées, dans un souci de clarté du dessin. De plus, certaines couches peuvent apparaître monolithiques sur les figures alors qu'elles sont en réalité constituées de plusieurs sous-couches. Des couches d'adhésif peuvent ne pas avoir été représentées entre différentes couches constitutives.

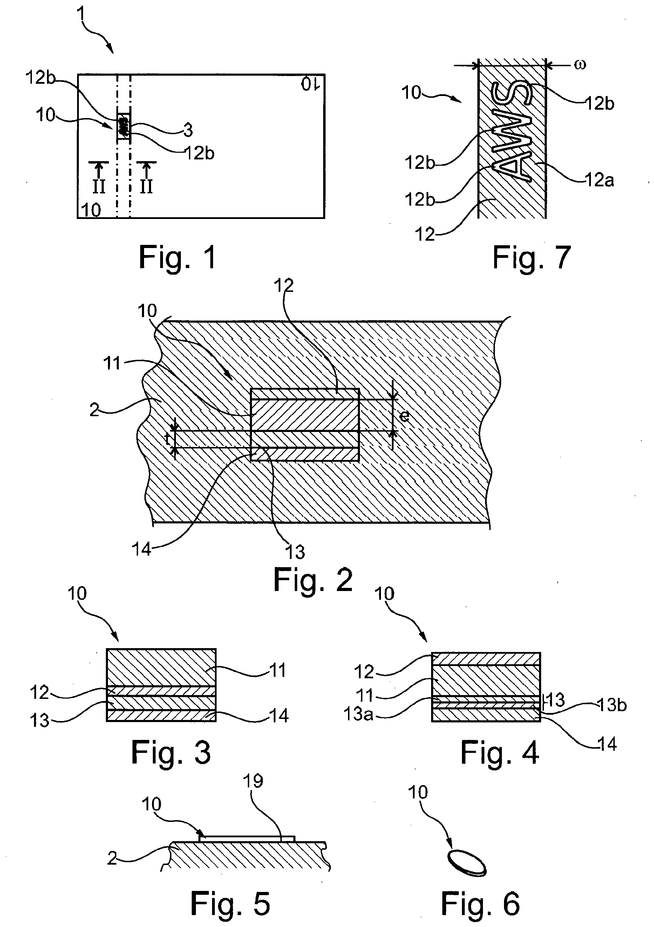

On a représenté sur la figure 1 un exemple de document sécurisé 1 conforme à un exemple de mise en oeuvre de l'invention.

Le document 1 comporte un substrat 2, de préférence en papier, formé d'un ou plusieurs jets.

Le document 1 intègre un élément de sécurité 10 selon l'invention, sous forme de fil (« thread » en anglais) dans l'exemple considéré.

L'élément de sécurité 10 comporte un support 11 en matière thermoplastique, qui assure la résistance mécanique du fil. Ce support 11 est par exemple en matière thermoplastique transparente telle que du PET ou du polyester. L'épaisseur e du support 11 va par exemple de 6 à 30 µm et la largeur *w* de l'élément 10 de 1 à 10 mm.

L'élément de sécurité 10 comporte une structure de sécurité 12, par exemple formée par métallisation / démétallisation. La structure de sécurité 12 comporte ainsi, par exemple, une couche de métal 12a, opaque, et des ajours 12b sous forme de lettres ou autres motifs reconnaissables. Ces ajours 12b sont visibles en lumière transmise à travers une fenêtre 3 du document 1. La structure de sécurité 12 peut également former une image tramée reconnaissable, dont le sujet est par exemple présent par ailleurs sur le document. Bien que la structure de sécurité comporte préférentiellement une métallisation / démétallisation, elle peut aussi comporter des motifs imprimés, par exemple avec une encre métallique, magnétique ou électriquement conductrice.

L'élément de sécurité 10 comporte une structure de masquage 13, par exemple comme illustré sur la figure 2 sous forme d'une couche unique située à l'opposé de la structure de sécurité 12 par rapport au support 11.

L'élément de sécurité 10 peut encore comporter une couche d'un adhésif thermoscellable 14, située de préférence comme illustré sur une face externe de l'élément 10, par exemple du côté opposé à la structure de sécurité 12 par rapport au support 11. L'élément 10 peut comporter une couche d'adhésif thermoscellable sur chacune de ses faces externes.

La couche 14 peut comporter un agent luminescent, notamment fluorescent. La structure de masquage 13 permet de diminuer la visibilité de l'élément dans le substrat 2 tout en conservant la transparence des motifs 12b en transmission, ainsi que la transparence aux UV le cas échéant.

L'invention permet d'éviter un problème de surépaisseur au sein du substrat, car la structure de masquage 13 peut être d'épaisseur *t* relativement faible.

L'invention permet l'utilisation pour réaliser la structure de sécurité 12 d'une couche métallique de densité optique relativement faible, grâce à la présence de la couche de masquage 13, sans pour autant que cela rende le fil trop visible en réflexion.

De préférence, la structure de masquage 13 comporte de la silice pyrogénée colloïdale, dont la taille des particules est nanométrique, combinée avec un pigment iridescent, par exemple de type Iriodin^{®} de la société Merck.

Le pigment présente de préférence une base transparente par exemple en mica, et des caractéristiques optiques complémentaires de celles de la silice pyrogénée colloïdale. Lorsque le substrat est blanc, le pigment est de préférence bleu ou vert ou bleu-vert. La couleur du pigment est celle obtenue en réflexion spéculaire d'incidence non normale.

La silice pyrogénée colloïdale est constituée de nanoparticules de silice, dont la taille est inférieure à 120 nm pour la moitié des particules.

La taille des particules de silice est comprise de préférence entre 30 nm et 1000 nm, de préférence encore entre 30 et 500 nm et plus préférentiellement entre 50 et 300 nm.

L'épaisseur t de la couche de masquage est comprise de préférence entre 2 et 30 µm, de préférence encore entre 5 et 20 µm et mieux entre 8 et 13 µm.

La quantité de pigment interférentiel multicouche par rapport à la masse de la structure de masquage est de préférence comprise entre 1 et 40%, mieux entre 2 et 30 % et de préférence encore entre 5 et 15 %.

La taille du pigment est comprise de préférence entre 2 et 150 µm, de préférence encore entre 5 et 40 µm et plus préférentiellement entre 5 et 25 µm.

### Exemple

On utilise une couche de masquage 13 ayant la formulation suivante :
- charge nanométrique Aerodisp W7330N de la société Evonik : 50 % en poids sec,
- pigment iridescent de référence 221 de la société Merck : 10 % en poids sec
- liant Cromelastic SE871 de Cromogenia-Units : 40 % en poids sec

Cette couche peut être appliquée par héliogravure (ou couchage hélio) sous la forme d'un revêtement d'épaisseur uniforme de 10 microns.

Dans cet exemple, la structure de sécurité 12 est une couche d'aluminium de 300 nm d'épaisseur, avec un texte en écriture négative, comme illustré sur la figure 4. Le support 11 est en PET.

Dans une variante, au-dessus de la couche de métal de la structure de sécurité 12, au moins une couche optiquement variable (dite OVI) peut également être déposée. Cette couche supplémentaire, non représentée, comporte par exemple des cristaux liquides, des pigments iridescents et/ou des couches ou structures interférentielles telles qu'un hologramme.

L'élément de sécurité peut également comporter un revêtement magnétique, par exemple sous forme de code.

D'une façon générale, du dioxyde de titane peut être ajouté dans la couche de masquage 13, en faible quantité, pour augmenter la diffusion de la lumière. Il s'agit de préférence d'un dioxyde de titane Rutile PGG 121 de la société Cristal dont la taille de particule D50 est inférieure à 220 nm.

Dans ce cas la formulation suivante peut être substituée à la précédente :
- charge nanométrique Aerodisp W7330N de la société Evonik : 50 % en poids sec,
- pigment iridescent de référence 221 de la société Merck : 6 % en poids sec,
- charge nanométrique Rutile PGG 121 de la société Cristal : 6 % en poids sec, et
- liant Cromelastic SE871 de Cromogenia-Units : 38 % en poids sec.

Une autre variante consiste à déposer le dioxyde de titane dans une couche séparée entre le support 11 et la couche de masquage 13.

Sur la figure 3, on a illustré la possibilité pour la structure de sécurité 12 et la structure de masquage 13 de se situer d'un même côté du support 11. L'autre face du support peut recevoir tout moyen de sécurisation supplémentaire, par exemple un composé luminescent, une structure optiquement variable, une structure holographique ou à base de réseau lenticulaire.

Sur la figure 4, on a représenté un élément de sécurité 10 dans lequel la structure de masquage 13 est composée de deux couches superposées 13a et 13b contenant respectivement la charge nanométrique et le pigment interférentiel multicouche. Ces deux couches peuvent être appliquées l'une sur l'autre.

L'élément de sécurité peut se présenter sous la forme d'un fil de sécurité intégré entièrement en masse dans le substrat du document de sécurité. Dans ce cas, la couche de masquage est avantageusement appliquée sur les deux faces du fil pour masquer celui-ci en réflexion et permettre son observation en lumière transmise.

Bien que l'invention s'applique de façon particulièrement avantageuse à un fil de sécurité, l'élément de sécurité 10 peut aussi se présenter sous la forme d'un foil ou d'un patch appliqué à la surface du substrat 2 du document 1, comme illustré à la figure 5.

La structure de masquage selon l'invention permet alors de rendre moins visible la face intérieure 19 de l'élément 10 tournée vers le substrat 2, lorsque la structure de masquage s'interpose entre le substrat 2 et la ou les couches de l'élément de sécurité à dissimuler.

Dans l'exemple de la figure 6, l'élément de sécurité 10 se présente sous la forme d'une planchette. La structure de masquage peut s'étendre sur les deux faces principales de la planchette. Cette dernière peut comporter un composé luminescent, notamment fluorescent.

Dans une variante encore, l'élément de sécurité se présente sous la forme d'une fibre, notamment colorée, métallique et/ou magnétique.

Bien que l'invention s'applique préférentiellement à un substrat papetier de couleur blanche, le substrat peut présenter une nuance de couleur.

Dans ce cas, la couche de masquage peut être sensiblement blanche ou présenter une même nuance colorée. L'ajustement de la couleur de la couche de masquage peut se faire en jouant sur la couleur d'iridescence du pigment interférentiel multicouche et le cas échéant sur la couleur de la charge nanométrique.

Une charge nanométrique autre que de la silice colloïdale pyrogénée peut être utilisée, cette charge étant de préférence d'un matériau transparent aux UV et de préférence également non opaque. D'autres charges nanométriques telles que du carbonate de calcium et du sulfate de baryum peuvent être utilisées avec et/ou en remplacement de la silice.

L'expression « comportant un » doit être comprise comme étant synonyme de « comportant au moins un », sauf si le contraire est spécifié.

## Revendications

1. Elément de sécurité (1), de préférence fil de sécurité, foil, patch, planchette, fibre, mieux fil de sécurité, pour document sécurisé (1), comportant :
- une structure de masquage (13) destinée à diminuer la visibilité d'une surface de l'élément lorsque celui-ci est présent au sein du document (1) ou à sa surface, la structure de masquage comportant une charge nanométrique et un pigment interférentiel multicouche,
- une structure de sécurité (12) se superposant au moins partiellement à la structure de masquage (13), la structure de sécurité (12) comportant une couche opaque (12a) et au moins un ajour (12b) dans cette couche opaque (12a).

2. Elément selon la revendication 1, l'élément (10) ayant deux faces principales opposées et la structure de masquage diminuant la visibilité d'au moins l'une desdites faces.

3. Elément selon l'une des revendications précédentes, le pigment interférentiel multicouche comportant une base minérale revêtue d'au moins une couche d'un indice de réfraction différent de celui de la base, notamment une base plaquettaire, de préférence en mica ou en verre.

4. Elément selon l'une quelconque des revendications précédentes, la quantité massique de pigment interférentiel multicouche par rapport à la masse de la structure de masquage étant comprise entre 1 et 40 %, de préférence entre 2 et 30 %, mieux entre 5 et 15 %.

5. Elément selon l'une quelconque des revendications précédentes, la taille du pigment interférentiel multicouche étant comprise entre 2 et 150 microns, mieux entre 5 et 40 microns, encore mieux entre 5 et 25 microns.

6. Elément selon l'une quelconque des revendications précédentes, la charge nanométrique ayant une dimension D50 comprise entre 30 et 1000 nm, mieux entre 30 et 500 nm, encore mieux entre 50 et 200 nm.

7. Elément selon l'une quelconque des revendications précédentes, la charge nanométrique comportant de la silice colloïdale, notamment pyrogénée, ladite silice colloïdale étant de préférence présente en une quantité massique comprise entre 20 et 80 %, mieux entre 30 et 70 %, encore mieux entre 40 et 60 % par rapport à la masse de la structure de masquage.

8. Elément selon l'une quelconque des revendications précédentes, l'épaisseur (t) de la structure de masquage (13) étant comprise entre 2 et 30 microns, mieux entre 5 et 20 microns, encore mieux entre 8 et 13 microns.

9. Elément selon l'une quelconque des revendications précédentes, le pigment et la charge étant dispersés dans un liant au sein d'une couche de la structure de masquage.

10. Elément selon l'une quelconque des revendications précédentes, la structure de sécurité (12) se superposant totalement à la structure de masquage (13), et/ou la structure de sécurité (12) comportant des ajours sous forme d'écriture négative dans la couche opaque (12a).

11. Elément selon l'une quelconque des revendications précédentes, comportant un support (11), notamment en un matériau thermoplastique, de préférence du PET ou du polyester.

12. Elément selon la revendication 11, la structure de sécurité (12) étant située d'un côté du support (11) et la structure de masquage (13) de l'autre côté, ou la structure de sécurité (12) et la structure de masquage (13) étant situées du même côté du support (11).

13. Elément selon l'une quelconque des revendications précédentes comportant une charge nanométrique supplémentaire, notamment du dioxyde de titane, de préférence de type anatase, ladite charge nanométrique supplémentaire étant de préférence en une quantité massique par rapport à la masse de la structure de masquage comprise entre 1 et 40 %, mieux entre 2 et 30 %, encore mieux entre 3 et 15 %, les charges nanométriques différant de préférence par leur indice de réfraction, notamment d'au moins 0,5 et de préférence d'au moins 0,8.

14. Elément selon l'une quelconque des revendications précédentes, comprenant en outre un agent luminescent, notamment mélangé à une couche de masquage de la structure de masquage, comprenant le pigment interférentiel multicouche et la charge nanométrique.

15. Elément selon l'une quelconque des revendications précédentes, comportant un adhésif thermoscellable (14), notamment au contact de la structure de masquage (13), l'adhésif comportant, de préférence, un agent luminescent, notamment fluorescent.

16. Elément selon l'une quelconque des revendications précédentes, comportant un agent luminescent, notamment au sein d'une couche distincte de la structure de masquage (13), de préférence au sein d'une couche située à l'opposé de la structure de sécurité relativement au support de la revendication 11.

17. Document (1) incorporant un élément de sécurité (10) selon l'une quelconque des revendications précédentes, l'élément de sécurité étant notamment sous forme de fil incorporé en fenêtre (3).

## Patentansprüche

1. Sicherheitselement (1), vorzugsweise Sicherheitsfaden, Folie, Aufkleber, Plakette, Faser, insbesondere Sicherheitsfaden, für ein Sicherheitsdokument (1), umfassend:
eine Maskierungsstruktur (13), die dazu ausgelegt ist, die Sichtbarkeit einer Oberfläche des Elements zu verringern, wenn diese im Inneren des Dokuments (1) oder auf seiner Oberfläche vorliegt, wobei die Maskierungsstruktur einen nanoskaligen Füllstoff und ein mehrschichtiges Interferenzpigment umfasst,
eine Sicherheitsstruktur (12) die sich zumindest teilweise der Maskierungsstruktur (13) überlagert, der Sicherheitsstruktur (12), die eine undurchsichtige Schicht (12a) und zumindest einen Durchbruch (12b) in dieser undurchsichtigen Schicht umfasst.

2. Element nach Anspruch 1, wobei das Element (10) zwei gegenüberliegende Hauptseiten hat und die Maskierungsstruktur die Sichtbarkeit von wenigstens einer dieser Seiten aus verringert.

3. Element nach einem der vorhergehenden Ansprüche, wobei das mehrschichtige Interferenzpigment eine mineralische Basis hat, die mit zumindest einer Schicht mit einem Brechungsindex beschichtet ist, der sich von demjenigen der Basis unterscheidet, insbesondere einer plättchenartigen Basis, vorzugsweise aus Glimmer oder aus Glas.

4. Element nach einem der vorhergehenden Ansprüche, wobei die Menge des mehrschichtigen Interferenzpigments in der Masse im Vergleich zur Masse der Maskierungsstruktur zwischen 1 und 40% liegt, vorzugsweise zwischen 2 und 30%, insbesondere zwischen 5 und 15%.

5. Element nach einem der vorhergehenden Ansprüche, wobei die Größe des mehrschichtigen Interferenzpigments zwischen 2 und 150 Mikrometern, vorzugsweise zwischen 5 und 40 Mikrometern, weiter bevorzugt zwischen 5 und 25 Mikrometern liegt.

6. Element nach einem der vorhergehenden Ansprüche, wobei der nanoskalige Füllstoff eine Dimension D50 hat, die zwischen 30 und 1000 nm, vorzugsweise zwischen 30 und 500 nm und weiter bevorzugt zwischen 50 und 200 nm liegt.

7. Element nach einem der vorhergehenden Ansprüche, wobei der nanoskalige Füllstoff kolloidale Kieselsäure, insbesondere Pyrogen, umfasst, wobei die kolloidale Kieselsäure vorzugsweise in einem Massenanteil vorliegt, der zwischen 20 und 80%, vorzugsweise zwischen 30 und 70%, weiter bevorzugt zwischen 40 und 60% im Verhältnis zur Masse der Maskierungsstruktur liegt.

8. Element nach einem der vorhergehenden Ansprüche, wobei die Dicke (t) der Maskierungsstruktur (13) zwischen 2 und 30 Mikrometern, vorzugsweise zwischen 5 und 20 Mikrometern, weiter bevorzugt zwischen 8 und 13 Mikrometern liegt.

9. Element nach einem der vorhergehenden Ansprüche, wobei das Pigment und der Füllstoff innerhalb einer Lage der Maskierungsstruktur in einem Bindemittel dispergiert sind.

10. Element nach einem der vorhergehenden Ansprüche, der Sicherheitsstruktur (12), die sich vollständig der Maskierungsstruktur (13) überlagert, und oder der Sicherheitsstruktur (12) unfassend Durchbrüche in der Form einer negativen Schrift.

11. Element nach einem der vorhergehenden Ansprüche umfassend einen Träger (11), insbesondere aus einem thermoplastischen Material, vorzugsweise aus PET oder Polyester.

12. Element nach Anspruch 11, wobei die Sicherheitsstruktur (12) auf einer Seite des Trägers (11) und die Maskierungsstruktur (13) auf der anderen Seite angeordnet ist, oder die Sicherheitsstruktur (12) und die Maskierungsstruktur (13) auf der gleichen Seite des Trägers (11) angeordnet sind.

13. Element nach einem der vorhergehenden Ansprüche, umfassend einen zusätzlichen nanoskaligen Füllstoff, insbesondere aus Titandioxid, vorzugsweise in Form von Anatas, wobei der zusätzliche nanoskalige Füllstoff vorzugsweise in einem Massenteil im Vergleich zur Masse der Maskierungsstruktur vorliegt, der zwischen 1 und 40%, vorzugsweise zwischen 2 und 30% und weiter bevorzugt zwischen 3 und 15% liegt, wobei die nanoskaligen Füllstoffe sich vorzugsweise durch ihren Brechungsindex unterscheiden, insbesondere um wenigstens 0,5 und vorzugsweise um wenigstens 0,8.

14. Element nach einem der vorhergehenden Ansprüche, umfassend ferner ein Lumineszenzmittel, insbesondere mit einer Maskierungsschicht der Maskierungsstruktur vermischt, welches das mehrschichtige Interferenzpigment und den nanoskaligen Füllstoff umfasst.

15. Element nach einem der vorhergehenden Ansprüche, umfassend einen heißversiegelbaren Klebstoff (14), insbesondere im Kontakt mit der Maskierungsstruktur (13), wobei der Klebstoff vorzugsweise ein Lumineszenzmittel, insbesondere fluoreszent, umfasst.

16. Element nach einem der vorhergehenden Ansprüche, umfassend ein Lumineszenzmittel, insbesondere innerhalb einer von der Maskierungsstruktur (13) getrennten Lage, vorzugsweise innerhalb einer Lage, die bezogen auf den Träger aus dem Anspruch 11 der Sicherheitsstruktur gemäß gegenüberliegt.

17. Dokument (1) umfassend ein Sicherheitselement (10) nach einem der vorhergehenden Ansprüche, wobei das Sicherheitselement insbesondere in der Form eines in ein Fenster (3) aufgenommenen Fadens vorliegt.

## Claims

1. A security element (1), preferably a security thread, foil, patch, flake or fiber, more preferably security thread, for a secured document (1), comprising:
- a masking structure (13) intended to decrease the visibility of a surface of the element when the latter is present within the document (1) or on its surface, the masking structure comprising a nanoscale filler and a multilayer interferential pigment,
- a security structure (12) superposed at least partially on the masking structure (13), the security structure (12) comprising an opaque layer (12a) and at least one opening (12b) in this opaque layer (12a).

2. The element as claimed in claim 1, the element (10) having two opposite major faces and the masking structure decreasing the visibility of at least one of said faces.

3. The element as claimed in one of the preceding claims, the multilayer interferential pigment comprising a mineral base coated with at least one layer of a refractive index different from that of the base, especially a platelet base, preferably made of mica or glass.

4. The element as claimed in any one of the preceding claims, the amount by weight of multilayer interferential pigment relative to the weight of the masking structure being comprised between 1 and 40%, preferably between 2 and 30% and better still between 5 and 15%.

5. The element as claimed in any one of the preceding claims, the size of the multilayer interferential pigment being comprised between 2 and 150 microns, better still between 5 and 40 microns and even better still between 5 and 25 microns.

6. The element as claimed in any one of the preceding claims, the nanoscale filler having a D50 size comprised between 30 and 1000 nm, better still between 30 and 500 nm and even better still between 50 and 200 nm.

7. The element as claimed in any one of the preceding claims, the nanoscale filler comprising colloidal and especially pyrogenated silica, said colloidal silica being preferably present in an amount by weight comprised between 20 and 80%, better still between 30 and 70% and even better still between 40 and 60% relative to the weight of the masking structure.

8. The element as claimed in one of the preceding claims, the thickness (t) of the masking structure (13) being comprised between 2 and 30 microns, better still between 5 and 20 microns and even better still between 8 and 13 microns.

9. The element as claimed in any one of the preceding claims, the pigment and the nanoscale filler being dispersed in a binder within a layer of the masking structure.

10. The element as claimed in any one of the preceding claims, the security structure (12) being superposed entirely on the masking structure (13), and/or the security structure (12) comprising the openings taking the form of a negative script.

11. The element as claimed in any one of the preceding claims, comprising a carrier (11), especially made of a thermoplastic material and preferably of PET or polyester.

12. The element as claimed in claim 11, the security structure (12) being located on one side of the carrier (11) and the masking structure (13) on the other side, or the security structure (12) and the masking structure (13) being located on the same side of the carrier (11).

13. The element as claimed in any one of the preceding claims, comprising an additional nanoscale filler, especially titanium dioxide and preferably titanium dioxide in anatase form, said additional nanoscale filler being preferably present in an amount by weight, relative to the weight of the masking structure, comprised between 1 and 40%, better still between 2 and 30% and even better still between 3 and 15%, the nanoscale fillers having preferably refractive indices that differ especially by at least 0.5 and more preferably by at least 0.8.

14. The element as claimed in any one of the preceding claims furthermore comprising a luminescent agent, especially mixed in a masking layer of the masking structure comprising the multilayer interferential pigment and the nanoscale filler.

15. The element as claimed in any one of the preceding claims, comprising a heatsealing adhesive (14) especially making contact with the masking structure (13), the adhesive comprising, preferably, a luminescent and especially fluorescent agent.

16. The element as claimed in any one of the preceding claims, comprising a luminescent agent, especially within a layer distinct from the masking structure (13), preferably within a layer located opposite the security structure relative to the carrier of claim 11.

17. A document (1) incorporating a security element (10) as claimed in any one of the preceding claims, the security element notably taking the form of a thread incorporated into a window (3).
